# EUROPEAN PATENT SPECIFICATION

(11) **EP 0 909 937 B1**
(45) Date of publication and mention of the grant of the patent: **10.12.2003**
(21) Application number: 98308447.6
(22) Date of filing: 15.10.1998
(51) Int. Cl.: G01B 7/34, G01N 27/00, G01L 9/00, G01P 15/08

(54) **Semiconductor strain sensor, method of manufacturing the sensor, and scanning probe microscope**
Halbleiter-Dehnungs-Sensor, Verfahren zu dessen Herstellung und Rastersondenmikroskop
Capteur semi-conducteur de tension, procédé pour sa fabrication et sonde-microscope de balayage

(30) Priority: 16.10.1997 JP 28411697; 02.10.1998 JP 28091098
(43) Date of publication of application: 21.04.1999
(73) Proprietor: Seiko Instruments Inc., Chiba-shi, Chiba-ken 261-0023 (JP); IBM Corporation, Armonk, NY 10504 (US)
(72) Inventor: Despont, Michel, Saumerstrasse 4 CH-8803 Ruschlikon (CH); Takahashi, Hiroshi, Mihama-ku, Chiba-Shi, Chiba (JP); Shimizu, Nobuhiro, Mihama-ku, Chiba-Shi, Chiba (JP); Shirakawabe, Yoshiharu, Mihama-ku, Chiba-Shi, Chiba (JP); Ichihara, Susumu, Mihama-ku, Chiba-Shi, Chiba 261-8507 (JP)
(74) Representative: Sturt, Clifford Mark

(56) References cited:
- EP-A- 0 695 927
- EP-A- 0 802 394
- WO-A-92/12398
- WO-A-94/29894
- WO-A-97/09584
- WO-A-97/24915
- US-A- 5 279 162
- US-A- 5 632 841

## Description

The present invention relates to a semiconductor strain sensor, a method of manufacturing the sensor, and a scanning probe microscope. In particular, the invention uses a Schottky electrode provided in a probe formed from a semiconductor substrate.

In the conventional scanning probe microscope (SPM), an exploring needle is attached at the free end of a probe. Deflection of the probe generated by movement up and down of the exploring needle in response to raggedness of the surface of a sample is detected using optical interferometry of an optical polarisation technique. However, there has been a problem that the construction needs complex adjustment in the optical detecting method.

Recently a small-size, light-weight semiconductor strain sensor has gained wide use. Such a sensor can output detection of the deflection directly as an electric signal. This sensor is adopted for the probe of a SPM.

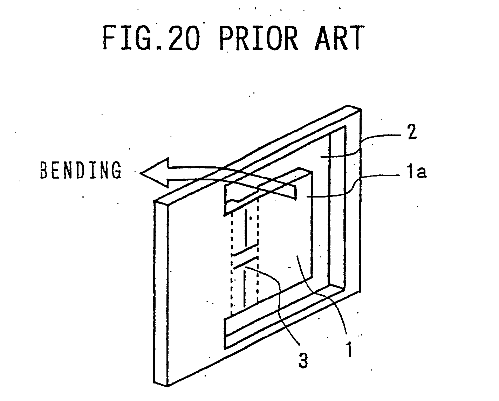

As shown in Fig. 20, for example, these probe-type semiconductor strain sensors comprise: a cantilever arm portion (beam portion) 1 having a free end 1a, formed by selectively etching a part of a semiconductor substrate 2 so as to be U-shaped; and a gage portion 3 formed near the fixed end (root) of the cantilever arm portion 1. The gage portion 3 detects stress/strain appearing at this portion in response to deflection of the free end 1a, so as to produce an output by converting the strain to an electric signal.

In the conventional semiconductor strain sensor, as described in Japanese Laid Open Patent No. 5-196458 for example, the gage portion is constructed with a piezo element. As the electric resistance of the piezo element varies by applying stress, deflection is detected by measuring resistance change of the piezo element using a resistance bridge circuit such as a Wheatstone bridge or the like.

As above-mentioned, when deflection of the probe is detected as stress/strain applied to the piezo element, as the resistance rate of change for strain of the piezo element (namely voltage or current rate of change) is small and sensitivity is low, not only is a complex bridge circuit needed for detection, but also extremely accurate adjustment of each resistance constructing the resistance bridge is needed.

US 5279162 discloses a semiconductor sensor comprising a semiconductor cantilever probe with a three terminal field effect transistor used for a Schottky junction.

WO 97/24915 discloses a microelectronics deformation sensor comprising a single crystal semiconductor base and cantilever probe. A Schottky junction is formed on the base adjacent the supported end of the cantilever. An object of the present invention is to provide a semiconductor strain sensor which mitigates the above-mentioned problems and which outputs deflection of the probe with high response speed and with a large signal change. It is an object of the invention to provide a method of manufacturing the sensor. It is also an object of the invention to provide a scanning probe microscope adopting the semiconductor strain sensor for the probe.

To solve the above-mentioned problems, the present invention may be characterised by the following means:
(1) A semiconductor strain sensor comprising:
   a semiconductor cantilever probe having a root spaced apart from a free end thereof; and
   a Schottky junction provided at the root of said semiconductor probe, characterised by comprising:
      a high concentration contact domain formed in a surface of said semiconductor probe and apart from said Schottky junction; and
      an electrode connected to said high concentration contact domain.
(2) A method of manufacturing a semiconductor strain sensor comprising the steps of:
   forming a semiconductor probe by etching a semiconductor substrate to form a probe shape;
   selectively forming a high concentration contact domain in the surface of said semiconductor probe;
   selectively Schottky joining a first electrode to the root portion of said semiconductor probe at a location apart from said high concentration contact domain; and
   connecting a second electrode to said high concentration contact domain.
(3) In the semiconductor strain sensor of the present invention, preferably a thin film is formed on at least one surface of said semiconductor probe so as to pre-stress the Schottky junction.
(4) A scanning probe microscope of the present invention uses a semiconductor strain sensor as in (1) or (3) above.

According to the above-mentioned configuration (1), as stress/strain appears at the Schottky junction and the electric characteristic (diode characteristic) of the Schottky junction is sharply changed when the free end of the probe bends, deflection of the free end can be measured by detecting the change with a suitable detecting circuit.

According to the above-mentioned configuration (2), a cantilever-type semiconductor stress/strain sensor can be produced easily.

According to the above-mentioned configuration (3), as the Schottky junction is pre-stressed and a larger stress/strain appears at the Schottky junction when the free end of the probe bends, the electric characteristic (diode characteristic) of the Schottky junction changes rapidly. When the direction of deflection is set to be opposite to the direction of movement of the exploring needle, the strain is measured with high accuracy as the angle between the surface of the sample and the exploring needle is about 90 degrees.

According to the above-mentioned configuration (4), as deflection of the probe is detected as a change of electric characteristic of the Schottky junction, the surface of the sample can be observed with high sensitivity.

Embodiments of the present invention will now be described by way of further example only and with reference to the accompanying drawings, in which:-
Fig. 1 is a perspective view of an outline of one aspect of the present invention.
Fig. 2A is a plan view of a first embodiment of the present invention.
Fig. 2B is a sectional view taken along line A-A' line of Fig. 2A.
Fig. 2C is a sectional view taken along line B-B' of Fig. 2A.
Fig. 3A is a view showing a forward direction current-voltage characteristic of a Schottky junction according to the present invention, and Fig. 3B shows a reverse direction current-voltage characteristic of the Schottky junction.
Fig. 4A is a view showing the current-voltage (I-V) characteristic of a Schottky junction and a piezo element (referred to as a piezo resistance in the drawing).
Fig. 5 is a current-strain characteristic of a Schottky junction compared with a piezo element.
Fig. 6 is a voltage-strain characteristic of a Schottky junction compared with a piezo element.
Figs. 7A to 7F are sectional views showing a method of manufacturing the probe according to Fig. 2.
Fig. 8A is a plan view of a second embodiment of the present invention and Fig. 8B is a sectional view taken along line C-C' of Fig. 8A.
Fig. 9 is a plan view of a third embodiment of the present invention.
Fig. 10 is a plan view of a fourth embodiment of the present invention.
Fig. 11 is a plan view of a fifth embodiment of the present invention.
Fig. 12 is a plan view of a sixth embodiment of the present invention.
Fig. 13 is a plan view of a seventh embodiment of the present invention.
Fig. 14 is a sectional view of a space charge layer appearing at a Schottky junction part taken along line D-D' line of Fig. 9.
Fig. 15A is a plan view of an eighth embodiment of the present invention.
Fig. 15B is a sectional view taken along line E-E' of Fig. 15A.
Fig. 15C is a sectional view of an alternative arrangement taken along line E-E'.
Fig. 16A is a plan view of a ninth embodiment of the present invention.
Fig. 16B is a sectional view taken by F-F' line of Fig. 16A.
Fig. 16C is a sectional view of an alternative arrangement taken along line F-F'.
Fig. 17A is a plan view of a tenth embodiment of the present invention.
Fig. 17B is a sectional view taken by G-G' line of Fig. 17A.
Fig. 17C is a sectional view of an alternative arrangement taken along line G-G'.
Fig. 18A is a plan view of the eleventh embodiment of the present invention.
Fig. 18B is a sectional view taken by H-H' line of Fig. 18A.
Fig. 19 is a block diagram of a scanning probe microscope using the present invention.
Fig. 20 is a perspective view showing the outline of a prior art probe-type semiconductor strain sensor.

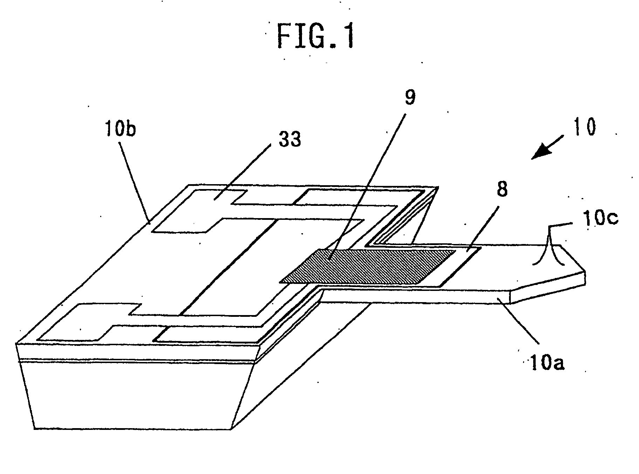

Referring to the figures, a first embodiment of the present invention will now be described in detail. Fig. 1 is a perspective view showing a general construction of a semiconductor probe according to the present invention. A probe 10 comprises an arm portion 10a having a free end, an exploring needle 10c being the tip of the arm portion, a supporting portion 10b holding and fixing the arm portion, a sensor portion 9, and thin film 8 (insulation film 40) formed in the region including at least the sensor portion 9. As bending of the arm portion 10a is concentrated on a portion of the root of the arm portion 9, it is desirable to form the sensor portion in the region of the junction between the arm portion 10a and the supporting portion 10b. In the present invention, a Schottky junction is used for the sensor portion.

An electrode for the detecting signal is connected to the sensor portion with wiring 33. Low resistance materials such as mainly Al, W, Ti, Ta, Cr, and so on are used for the wiring material. Among these materials, Al is the most generally applicable.

The thin film 8 functions to pre-stress the sensor portion 9. The use of compressive stress is desirable because the direction of the exploring needle 10c is almost perpendicular with respect to the sample and this enables accurate sample observation as the arm portion 10a bends to the under side shown in Fig. 1.

Layer insulation film 30 can replace the insulation film 40 at the location where stress is applied. In this case, the thin film 8 can be omitted. Stress can be applied to the sensor portion by using a pre-stress material for the wiring 33 so as to replace the thin film 8. Namely, any material except an insulation film can be used if the thin film 8 applies stress to the sensor portion 9 and does not exert a bad influence such as short-circuiting the electric characteristic of the sensor portion 9.

Although the shape of the sample can be observed at the tip part of the arm portion 10a without the exploring needle 10c, it is desirable that the exploring needle 10c is formed in order to obtain high accuracy and high resolution. In order to obtain high accuracy and high resolution, it is desirable that the exploring needle 10c is longer than the height of the raggedness of the observed sample and that the diameter of the tip is small. Various shapes can be used, such as the substantial rectangular shape shown in Fig. 1, or a U-shape, or the like, so as to allow design in response to the characteristic use of the arm portion 10a.

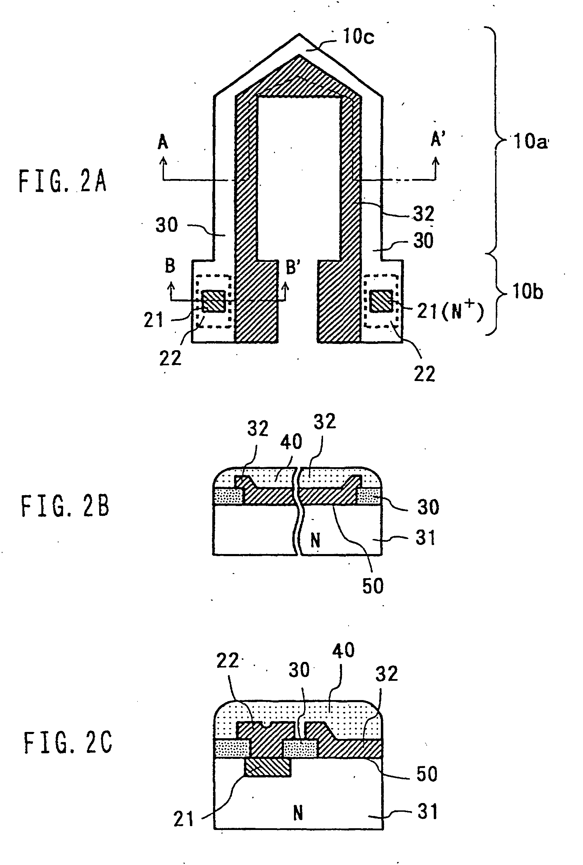

Fig. 2A is a plan view of a probe-type semiconductor strain sensor of a first embodiment of the present invention, particularly for describing the arm portion 10b and the sensor portion 9 of Fig. 1. Fig. 2B is a cross sectional view taken along line A-A' of Fig. 2A. Fig. 2C is a cross sectional view taken along line B-B' of Fig. 2A. In Fig. 2A, the insulation 40 (thin film 8) is not shown.

The probe 10 of this embodiment comprises a U-shaped cantilever arm portion 10a and a supporting portion 10b. At the tip of the cantilever arm portion 10a, an exploring needle 10c for SPM is formed. In the present embodiment, the probe 10 comprises an N-type substrate 31, and on a surface thereof an electrode 32 is Schottky-joined in a U shape along the inside of the arm portion 10a. The electrode 32 is not formed where the layer insulation film 30 is formed. At the supporting portion 10b, an N⁺ contact domain 21 is formed in the surface of the N-type substrate 31 and electrodes 22 are connected thereto. Electrodes 22 are connected to the wiring 33 shown in Fig. 1 and supply bias voltage (current). They carry the detection signal. It is possible to produce the electrodes 22 with the same material as the wiring 33, and both can be formed at the same time.

An insulation film 40 such as, for example, a SiO₂ film, a Si₃N₄ film, or the like is provided over the surface of the N-type substrate 31 and can constitute the thin film 8 for pre-stressing the Schottky junction 50. It is desirable to form the insulation film 40 so that the pre-stress/strain is about 1x10⁹ Pa. However, the value is determined depending on the structure of the junction portion and the manufacturing procedure.

It is not necessary for the insulation film 40 to be formed over all of the surface of the N-type substrate 31. The film may be formed, for example, only over the surface of the cantilever arm portion 10a or only over the part between the arm portion 10a and the supporting portion 10b. The requirement is to pre-stress the Schottky junction 50 between the substrate 31 and the electrode 32.

In this construction, as the cantilever arm portion 10a of the probe 10 bends with the supporting portion 10b acting as a fulcrum when the exploring needle 10c is displaced in the vertical direction, strain/stress appears at the Schottky junction 50 of the arm portion 10a, especially at the surface of a beam portion.

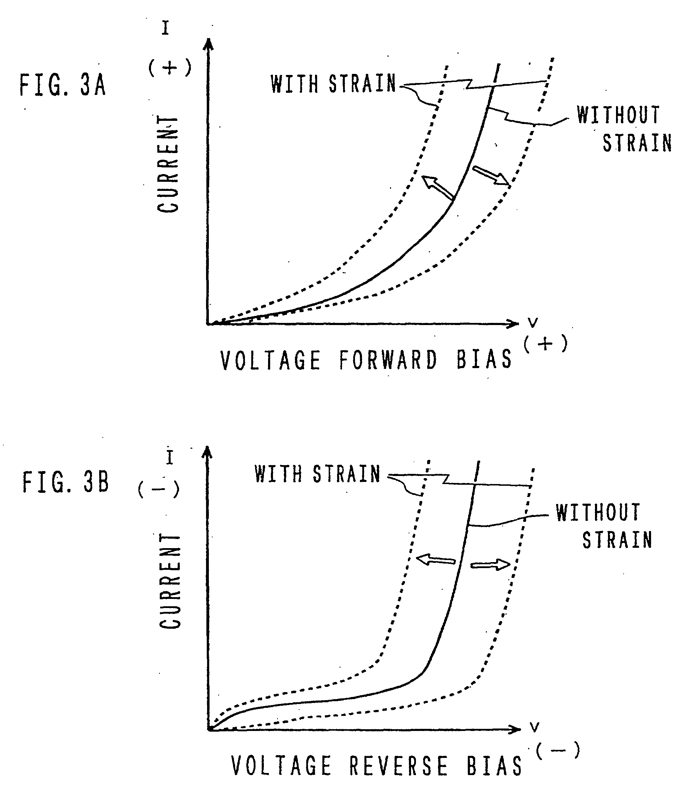

Figs. 3A and 3B are views showing an example of a diode characteristic of a Schottky junction subjected to stress/strain. Fig. 3A shows the forward bias characteristic and Fig. 3B shows the reverse bias characteristic. It is noted that forward direction current to forward bias changes when stress/strain appears at the Schottky junction 50 during forward bias. During reverse bias too, break voltage changes and leakage current changes too when stress/strain appears.

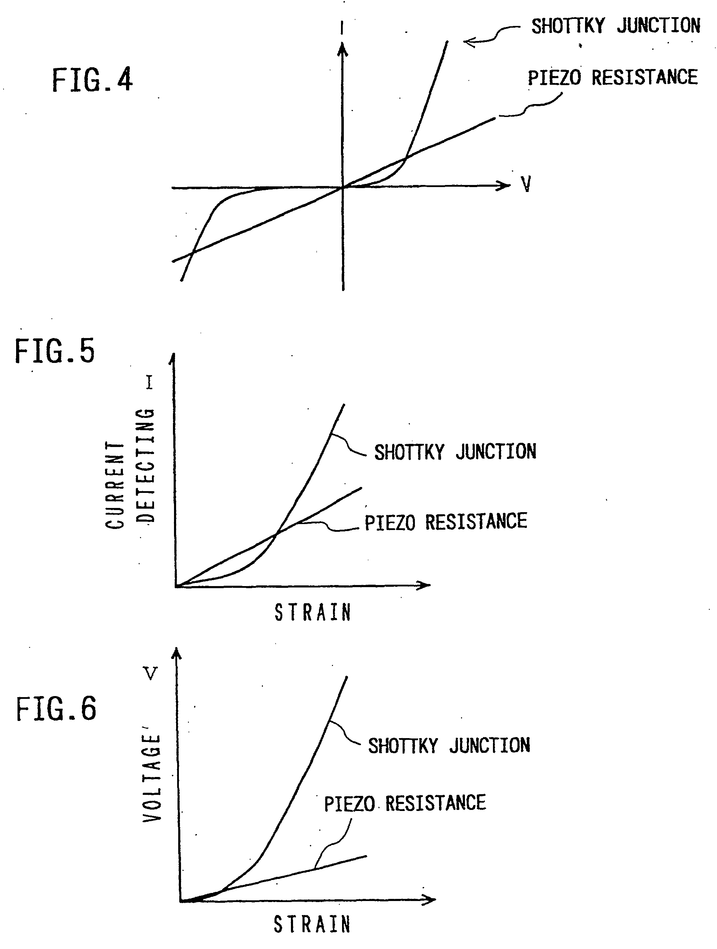

Figs. 4 to 6 are respective views of the current-voltage (I-V) characteristic of the Schottky junction, current (I) strain characteristic, and voltage (V) strain characteristic compared with a piezo element (referred to as a piezo resistance in the drawings). The rate of change of current I and voltage V to stress are larger in the Schottky junction than in the piezo element at larger stress values, as shown in Figs. 5 and 6. Therefore, by forming the Schottky junction 50 at the beam portion of the probe 10 and by detecting the change of the diode characteristic in the region of the larger rate of change as in the present embodiment, detection sensitivity improves so as to correctly measure deflection of the probe 10 without using a difficult to control bridge circuit such as Wheatstone bride and the like.

The rate of change of the diode characteristic as a result of deflection of the probe is larger for larger deflections, and sufficient detecting sensitivity cannot be obtained when the deflection is small and a small detection region is used. With a small region for detecting stress/strain, signal processing becomes rather complex because the current I changes as a secondary function of stress/strain, as shown in Fig. 5.

In contrast, in the present invention the Schottky junction 50 is pre-stressed by the insulation film 40 (the thin film 8). Therefore, strain appearing transiently depending on displacement during observation and the pre-stress are superimposed. Because of that, larger strain appears compared with the case that the insulation film 40 is not formed. In the large stress/strain region, signal processing at actual observation values becomes easy as the current I changes substantially linearly to stress/strain. The above-mentioned change depends on the structure of the Schottky junction and the manufacturing process. Therefore, changing the quantity of the characteristic is not fixed and can show a similar characteristic as a piezo element depending on conditions.

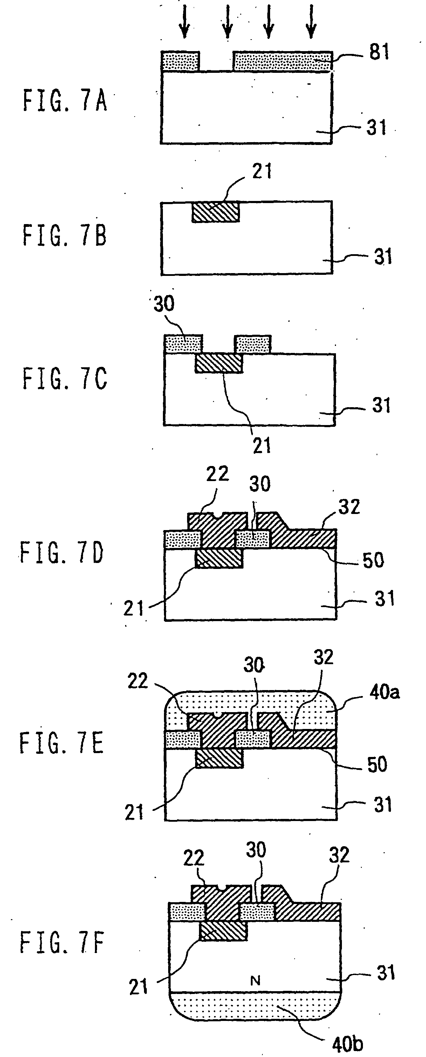

Figs. 7A to 7F are sectional views of process steps showing a method of manufacturing said probe-type semiconductor strain sensor with the structure described in Fig. 2A. In particular, Figs. 7A to 7F show a sectional structure taken along the line B-B' of Fig. 2A.

First, an N-type semiconductor substrate 31 is etched to the probe shape of Fig. 2, and a resist 81 is applied over the whole of one surface. Next, a mask is formed by selectively removing only part of the resist equivalent to the N⁺ contact domain 21. This is achieved using the well-known photo resist technique (Fig. 7A). Next, an N-type impurity (for example,-phosphorus) is ion-implanted so as to form an N⁺ contact domain 21 in the surface of the substrate 31 (Fig. 7B).

Next, an SiO₂ insulation film 30 is formed on the surface of the substrate. The part equivalent to the N⁺ contact domain 21 and the part equivalent to the Schottky junction 50 are opened so as to expose the N⁺ contact domain 21 and the Schottky junction domain (Fig. 7C).

Next, the Schottky junction 50 is formed by ohmic contact of an electrode 22 to the N⁺ contact domain 21 and by Schottky-joining an electrode 32 to the Schottky junction domain (Fig. 7D).

Next, an insulation film 40a is formed to pre-stress the Schottky junction 50 (Fig. 7E). Although the insulation film 40 (40a) is formed as shown in the present embodiment, the insulation film 40 (40b) may be formed on the back of the substrate (Fig. 7F).

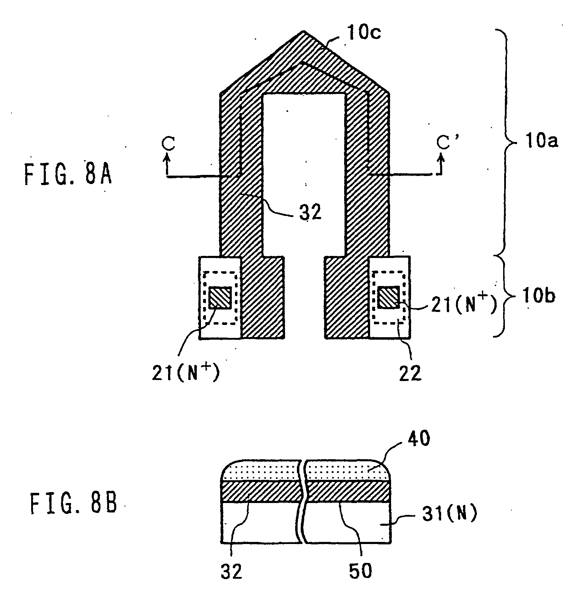

Fig. 8A is a plan view of a semiconductor probe of a second embodiment according to the present invention. Fig. 8B is a cross sectional view taken along the line C-C' of Fig. 8A. The same symbols are used as previously to show the same or similar components. The present embodiment is characterised in that Schottky junction 50 is actually formed over the whole surface of the arm portion 10a.

That is, in the above-mentioned first embodiment, the area of the Schottky junction is comparatively small as the Schottky junction 50 is formed only over a part of the surface of the arm portion 10a. Because of that, while leakage current is small, it is difficult to obtain high sensitivity. However, the second embodiment is characterised in that high sensitivity is obtained even though the leakage current increases a little compared with said first embodiment; as a result of the Schottky junction 50 being formed over the whole surface of the arm portion 10a.

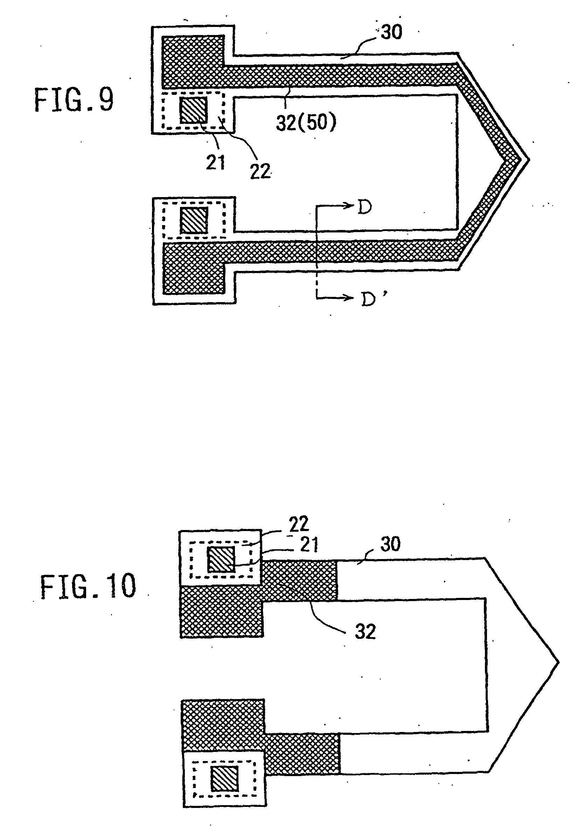

Next, referring to Figs. 9 to 13, other embodiments of the present invention will be described. Said insulation film 40 (thin film 8) for pre-stressing the Shottky junction 50 may be formed on at least one of the front or back surface in any of these embodiments.

Fig. 9 is a plan view of a third embodiment of the present invention. The same symbols are used as previously to show the same or similar components. The embodiment is characterised in that an electrode 32, namely a Schottky junction 50, is formed in a band shape at the center portion of the arm portion 10 so that the Schottky junction is not exposed at end surfaces of the arm portion 10a. Although leakage current generally appears near the end surface of the PN junction, high sensitivity is obtained while leakage current is reduced even though the manufacturing process becomes a little complex.

Fig. 10 is a plan view of a fourth embodiment of the present invention. The same symbols are used as previously to show the same or similar components. The present embodiment is based on the fact that strain caused by displacement of the probe 10 is concentrated on the junction between the arm portion 10a and the supporting portion 10b, namely a beam portion of the probe 10, and at all other points the strain is less.

The present embodiment, as shown in the figure, is characterised in that an electrode 32 (a Schottky junction 50) is formed only at said beam portion. According to the present embodiment, high sensitivity is obtained while leakage current is reduced; since the shottky junction is not formed at any part not contributing to the detection of strain.

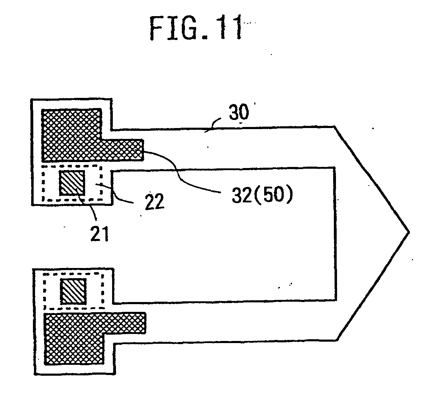

Fig. 11 is a plan view of a fifth embodiment of the present invention. The same symbols are used as previously to show the same or similar components. The present embodiment is characterised in that an electrode 32 (a Schottky junction 50) is formed only at the beam portion of the probe 10, and is there formed in a band shape at the center portion of the probe 10; in order to decrease leakage current, similarly to said fourth embodiment.

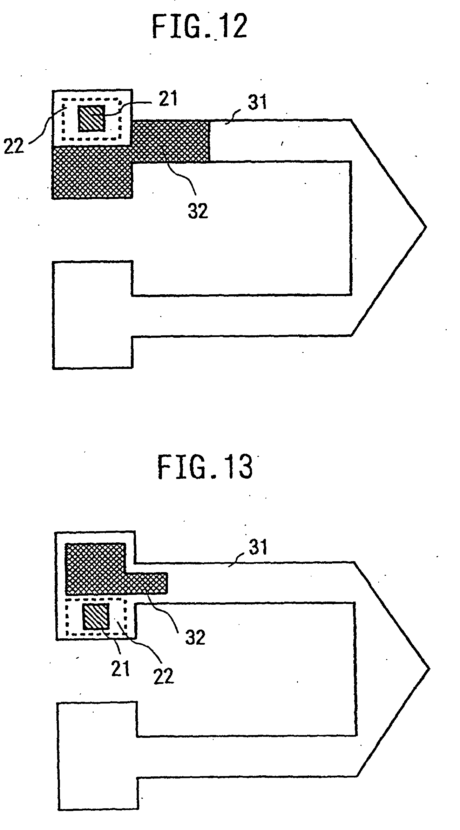

Figs. 12 and 13 are plan views of a sixth and a seventh embodiment of the present invention, respectively. The same symbols are used as previously to show the same or similar components. Each of these embodiments is characterised in that the electrode 32 (the Schottky junction 50) is similar to that of said fourth and fifth embodiments respectively, but is formed only on one of said beam portions. According to the sixth and seventh embodiments, leakage current is sharply decreased, although detection sensitivity decreases a little.

Although as described, a metal electrode is connected to the N-type substrate 31 to obtain the Schottky junction in each of the above mentioned embodiments, alternatively a metal electrode may be contacted to a P-type substrate to obtain the Schottky junction.

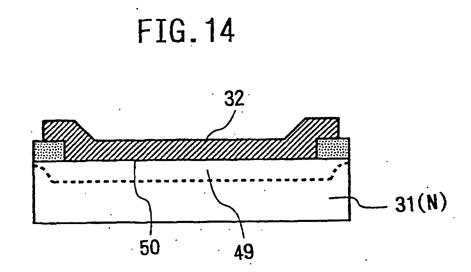

In the configuration forming the Schottky junction 50 so as not to expose the junction at end surfaces of the probe (such as the embodiments described with reference to Figs. 9, 11, and 13), leakage current resulting from a spread of the surface charge layer 49, as shown in Fig. 14, increases as a result of reverse bias being applied to the Schottky junction 50. In usual use, leakage current appears at the end portions of the arm portion 10a. Because of that, a new problem may appear in that the measuring sensitivity may decrease. Therefore, in each embodiment of the present invention described below, such an increase of leakage current is suppressed.

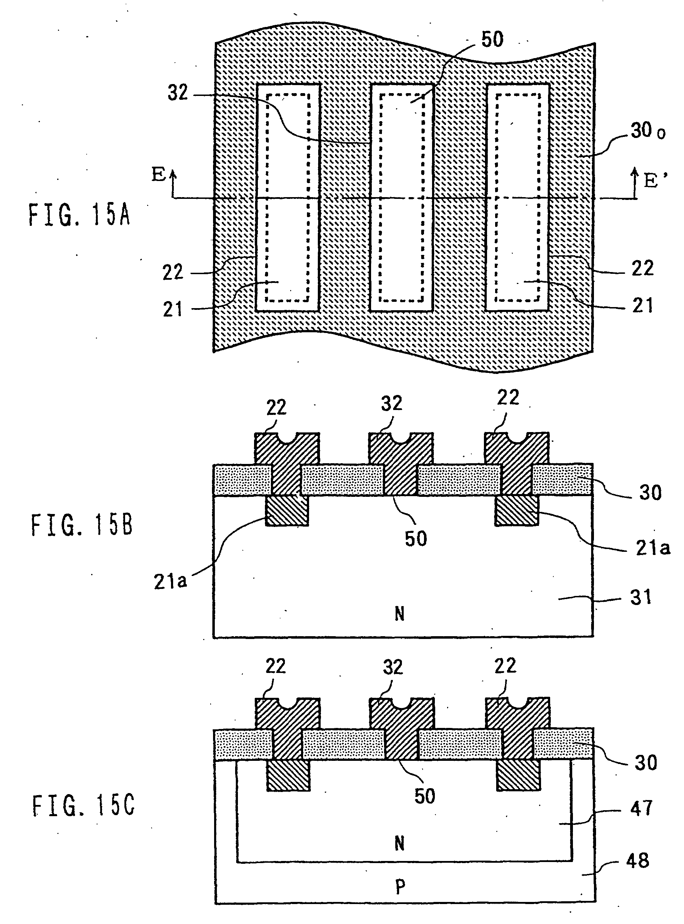

Fig. 15A is a plan view of an eighth embodiment of the present invention. Figs. 15B and 15C are different possible sectional views taken along line E-E' of Fig. 15A. These figures show to enlarged scale the beam bending portion at the base or root of the arm portion 10a. In the present embodiment, an electrode 32 is formed in a band shape at the center of the beam portion of the probe 10 so that the Schottky junction 50 is not exposed at the end surfaces of the probe 10, as shown in Fig. 15A. An N⁺ contact domain 21a is formed in a surface of an N-type substrate 31 between the end portion 10a and the Schottky junction 50, which serves to prevent enlargement of the space charge layer.

According to this configuration, the horizontal spread of the space charge domain 49 or the like appearing at the circumference of the Schottky junction is prevented by the N⁺ contact domain 21a. Therefore, leakage current is suppressed so as to prevent decrease of the measuring sensitivity.

By forming an N-type semiconductor domain 47 in the main surface of a P-type substrate 48 in an island-shape and by forming the above-mentioned configuration in the N-type semiconductor domain 47, leakage current is further suppressed by separation with a PN junction.

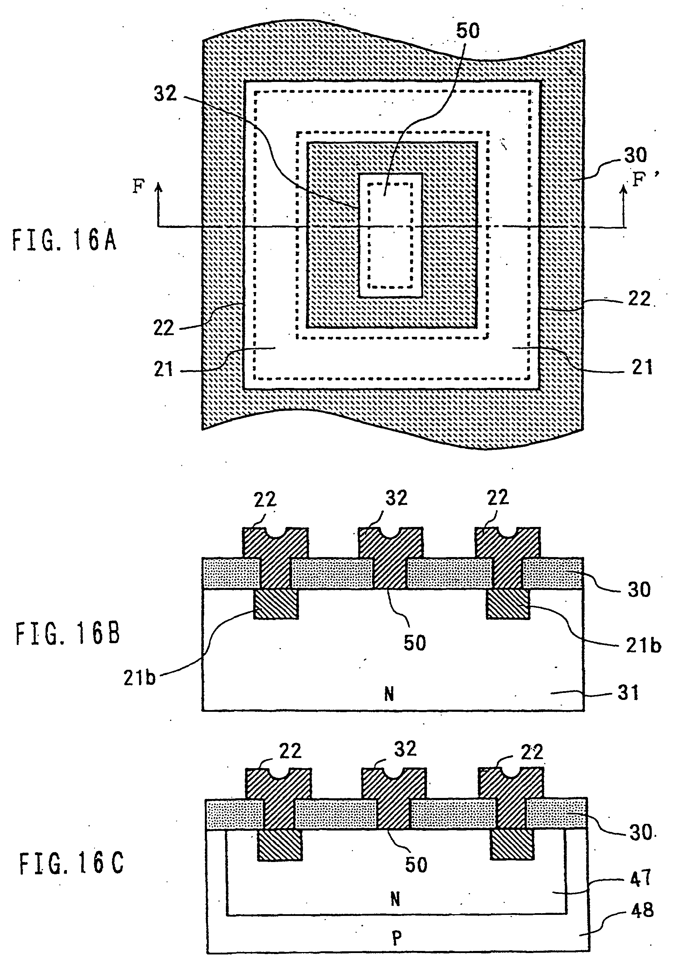

Fig. 16A is a plan view of a ninth embodiment of the present invention. Figs. 16B and 16C are different possible sectional views taken along line F-F' of Fig. 16A. The same symbols are used as previously to show the same or similar components. The present embodiment is characterised in that an electrode 32 is formed in a band shape at the center portion of a probe 10 so that the Schottky junction 50 is not exposed at the end surfaces of the probe 10 and an N⁺ contact domain 21b is formed to surround the Schottky junction 50 as shown in Fig. 16A.

In the present embodiment, the horizontal spread of the space charge layer 49 is prevented by the N⁺ contact domain 21 so that it does not reach the end portion of the arm portion 10a. Therefore, the measuring sensitivity is kept high because an increase in leakage current is suppressed. By forming the above-mentioned configuration in an N-type semiconductor domain 47, as shown in Fig. 16C, leakage current is further suppressed by separation with a PN junction.

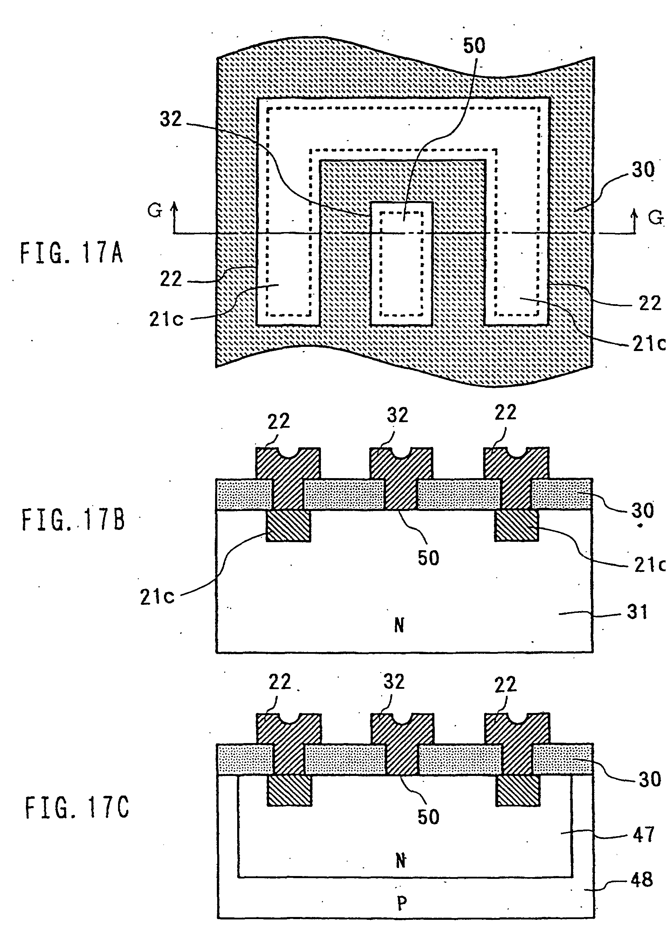

Fig. 17A is a plan view of a ninth embodiment of the present invention. Figs. 17B and 17C are different possible sectional views taken along line G-G' of Fig. 17A. The same symbols are used as previously to show the same or similar components. The present embodiment is characterised in that an electrode 32 is formed at the center portion of a probe 10 so that the Schottky junction 50 is not exposed at the end surfaces of the probe 10 and an N⁺ contact domain 21c is formed to surround the Schottky junction 50 in three directions.

In the present invention, leakage current appearing at the circumference of the Schottky junction 50 is suppressed by the N⁺ contact domain 21c and the leakage current does not reach the end portions of the probe 10. Therefore, measuring sensitivity is kept high because any increase of leakage current is suppressed. By forming the above-mentioned configuration in an N-type semiconductor domain 47, as shown in Fig. 17C, leakage current is further suppressed by separation with a PN junction.

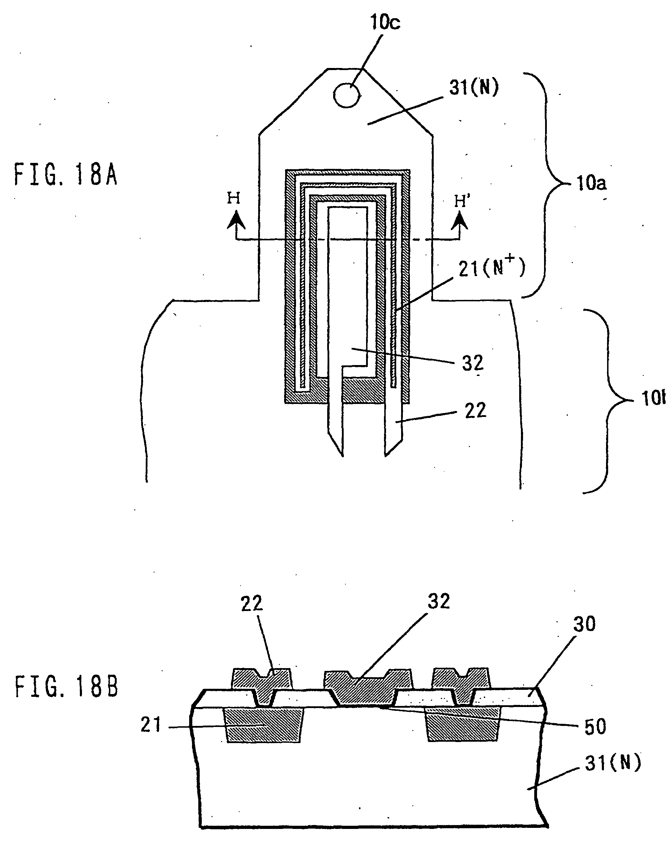

Figs. 18A and 18B show an example in which the sensor of the ninth embodiment of the present invention (Fig. 16) is actually formed on a rectangular arm portion. Fig. 18A is a plan view of the embodiment. Fig. 18B is a sectional view taken along the line H-H' of Fig. 18A. The same symbols are used as previously to show the same or similar components. In the eighth to tenth embodiments, the width of the sensor becomes wide as the Schottky junction 50 is formed at the center of the sensor portion, and at a circumference portion an N⁺ contact domain 21 is formed. Therefore, in order to make the width of the arm portion 10a small, a rectangular arm is easier than a U-shape arm for the design of the arm portion.

Although it is described above that the thin film for providing the pre-stress is the insulation film 40 in each embodiment, the present invention is not limited thereby. The thin film may be a conductive film or a semiconductive film so long as the insulation film is previously formed on the surface of the substrate without providing a pre-stress and the thin film is formed on the insulation film.

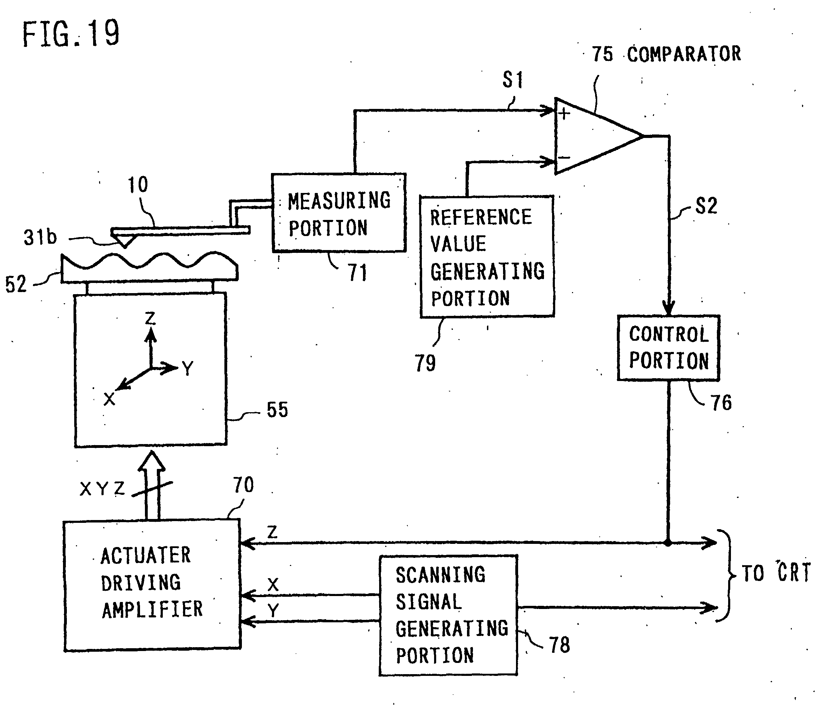

Fig. 19 is a block diagram showing a configuration of a scanning probe microscope using the present invention. A sample 52 is set on a three dimensions sample stage 55, and an exploring needle 31 b of the probe 10, configured as described above, is arranged facing the stage. The diode characteristic of the Schottky junction formed in the probe 10 is detected at a measuring portion 71 and input to a non-inversion input terminal (+) of a differential amplifier 75 as a bending signal S1.

A reference value relative to bending of the probe 10 is input to an inversion input terminal (-) of the differential amplifier 75 so that the output of the differential amplifier 75 becomes zero when bending is zero, for example. An error signal S2 output from the differential amplifier is input to a control portion 76. The control portion 76 controls an actuator driving amplifier 70 so that the error signal S2 approaches zero. The output signal of the control portion 76 is also supplied to a CRT as a luminance signal. A scanning signal generating portion 78 supplies a differential signal, for slightly moving the sample 52 in XYZ directions, to the actuator driving amplifier 70. The scanning signal generating portion 78 also supplies a raster scanning signal to the CRT.

As above-mentioned, the present invention has the following advantages:
(1) Not only sensitivity to bending of the probe increases, but the configuration of a detecting circuit connected to the next stage is improved by detection of bending of the probe as a change of electric characteristic of the Schottky junction.
(2) Measuring sensitivity can be kept high by suppressing any increase of leakage current; by forming a high concentration contact domain between the Schottky junction and the end portions of the probe, so that the space charge layer appearing at the Schottky junction does not reach the end portions of the probe.
(3) Sensitivity to deflection of the probe can be improved; by forming a thin film over the main surface of the probe so as to pre-stress a Schottky junction domain which is subjected to stress/strain when the probe bends.
(4) The surface shape of the sample can be observed with high sensitivity; by using a semiconductor strain sensor of the present invention as a probe of a scanning probe microscope, with the surface shape of the sample being detected from the strain value of the probe being detected as a change of an electric characteristic of the Schottky junction.

## Claims

1. A semiconductor strain sensor comprising:
a semiconductor cantilever probe (10) having a root spaced apart from a free end thereof; and
a Schottky junction (9) provided at the root of said semiconductor probe, **characterised by** comprising:
a high concentration contact domain (21) formed in a surface of said semiconductor probe and apart from said Schottky junction; and
an electrode (22) connected to said high concentration contact domain.

2. A semiconductor strain sensor according to claim 1, wherein said electrode is ohmic-contacted to said high concentration contact domain.

3. A semiconductor strain sensor according to claim 1 or claim 2, wherein the Schottky junction has a belt-shape along the end portion of said probe.

4. A semiconductor strain sensor according to claim 1 or claim 2, wherein the Schottky junction is provided over substantially the whole surface of said probe.

5. A semiconductor strain sensor according to claim 1 or claim 2, wherein the Schottky junction is provided at a region spaced apart from the end portions of said probe.

6. A semiconductor strain sensor according to claim 5, wherein said high concentration contact domain is formed between the Schottky junction and the end portions of the substrate.

7. A semiconductor strain sensor according to claim 5, wherein said high concentration contact domain surrounds the Schottky junction in a surface of the substrate.

8. A semiconductor strain sensor according to any of claims 5 and 7, wherein the said semiconductor probe is constructed so that a conductive type semiconductor domain different from said semiconductor substrate is formed in the semiconductor substrate, and an electrode is Shottky-joined at the surface of said semiconductor domain to form the Schottky junction.

9. A method of manufacturing a semiconductor strain sensor comprising the steps of:
forming a semiconductor probe (10) by etching a semiconductor substrate to form a probe shape;
selectively forming a high concentration contact domain (21) in the surface of said semiconductor probe;
selectively Schottky joining a first electrode (22) to the root portion (9) of said semiconductor probe at a location apart from said high concentration contact domain; and
connecting a second electrode (32) to said high concentration contact domain.

10. A method of manufacturing a semiconductor strain sensor according to claim 9, further comprising a step of forming a thin film (8) on at least one surface of said probe to press-stress said Schottky junction.

11. A scanning probe microscope using the semiconductor strain sensor according to any of claims 1 to 8.

## Patentansprüche

1. Halbleiterverformungssensor umfassend:
eine Halbleiterauslegersonde (10) mit einem Ursprung, welcher in einem Abstand von einem freien Ende desselben angebracht ist;
und
einen Schottky-Übergang (9), welcher an dem Ursprung der Halbleitersonde vorgesehen ist, **dadurch gekennzeichnet, dass** er
umfasst:
einen Hochkonzentrationskontaktbereich (21 ), welcher in einer Oberfläche der Halbleitersonde und getrennt von dem Schottky-Übergang ausgebildet ist; und
eine Elektrode (22), welche mit dem Hochkonzentrationskontaktbereich verbunden ist.

2. Halbleiterverformungssensor nach Anspruch 1, wobei die Elektrode mit dem Hochkonzentrationskontaktbereich ohmsch kontaktiert ist.

3. Halbleiterverformungssensor nach Anspruch 1 oder Anspruch 2, wobei der Schottky-Übergang eine Bandform entlang des Endabschnitts der Sonde aufweist.

4. Halbleiterverformungssensor nach Anspruch 1 oder Anspruch 2, wobei der Schottky-Übergang im Wesentlichen über der gesamte Oberfläche der Sonde vorgesehen ist.

5. Halbleiterverformungssensor nach Anspruch 1 oder Anspruch 2, wobei der Schottky-Übergang in einem Bereich, der von den Endabschnitten der Sonde einen Abstand aufweist, bereitgestellt ist.

6. Halbleiterverformungssensor nach Anspruch 5, wobei der Hochkonzentrationskontaktbereich zwischen dem Schottky-Übergang und den Endabschnitten des Substrats ausgebildet ist.

7. Halbleiterverformungssensor nach Anspruch 5, wobei der Hochkonzentrationskontaktbereich den Schottky-Übergang in einer Oberfläche des Substrats umgibt.

8. Halbleiterverformungssensor nach einem der Ansprüche 5 und 7, wobei die Halbleitersonde so konstruiert ist, dass ein Halbleiterbereich vom leitfähigen Typ verschieden von dem Halbleitersubstrat in dem Halbleitersubstrat ausgebildet ist und eine Elektrode an der Oberfläche des Halbleiterbereichs Schottky-verbunden ist, um den Schottky-Übergang auszubilden.

9. Verfahren zum Herstellen eines Halbleiterverformungssensors umfassend die Schritte:
Ausbilden einer Halbleitersonde (10) durch Ätzen eines Halbleitersubstrats, um eine Sondenform zu bilden;
wahlweises Ausbilden eines Hochkonzentrationsbereichs (21) in der Oberfläche der Halbleitersonde;
wahlweises Schottky-Verbinden einer ersten Elektrode (22) mit dem Ursprungsabschnitt (9) der Halbleitersonde an einer von dem Hochkonzentrationskontaktbereich getrennten Position; und
Verbinden einer zweiten Elektrode (32) mit dem Hochkonzentrationskontaktbereich.

10. Verfahren zum Herstellen eines Halbleiterverformungssensors nach Anspruch 9, ferner umfassen einen Schritt zum Ausbilden eines dünnen Films (8) auf wenigstens einer Oberfläche der Probe, um den Schottky-Übergang einer Druckbelastung auszusetzen.

11. Mikroskop mit abtastender Sonde, welches den Halbleiterverformungssensor gemäß einem der Ansprüche 1 bis 8 verwendet.

## Revendications

1. Capteur de déformation en semiconducteur, comprenant :
une sonde en semiconducteur en porte-à-faux (10) présentant un pied espacé d'une extrémité libre de celle-ci ;
une jonction Schottky (9) prévue au niveau du pied de ladite sonde en semiconducteur, **caractérisé en ce qu'**il comprend :
un domaine de contact à forte concentration (21) formé dans une surface de ladite sonde en semiconducteur et espacé de ladite jonction Schottky ; et
une électrode (22) connectée audit domaine de contact à forte concentration.

2. Capteur de déformation en semiconducteur selon la revendication 1, dans lequel ladite électrode est en contact ohmique avec ledit domaine de contact à forte concentration.

3. Capteur de déformation en semiconducteur selon la revendication 1 ou la revendication 2, dans lequel la jonction Schottky a la forme d'une courroie le long de la portion d'extrémité de ladite sonde.

4. Capteur de déformation en semiconducteur selon la revendication 1 ou la revendication 2, dans lequel la jonction Schottky est prévue sur essentiellement toute la surface de ladite sonde.

5. Capteur de déformation en semiconducteur selon la revendication 1 ou la revendication 2, dans lequel la jonction Schottky est prévue au niveau d'une région espacée des portions d'extrémité de ladite sonde.

6. Capteur de déformation en semiconducteur selon la revendication 5, dans lequel ledit domaine de contact à forte concentration est formé entre la jonction Schottky et les portions d'extrémité du substrat.

7. Capteur de déformation en semiconducteur selon la revendication 5, dans lequel ledit domaine de contact à forte concentration entoure la jonction Schottky dans une surface du substrat.

8. Capteur de déformation en semiconducteur selon l'une quelconque des revendications 5 et 7, dans lequel ladite sonde en semiconducteur est construite de façon à former un domaine en semiconducteur de type conducteur, différent dudit substrat en semiconducteur, dans le substrat en semiconducteur et à connecter une électrode par jonction Schottky au niveau de la surface dudit domaine en semiconducteur pour former la jonction Schottky.

9. Procédé de fabrication d'un capteur de déformation en semiconducteur, comprenant les étapes de :
formation d'une sonde en semiconducteur (10) par attaque chimique d'un substrat en semiconducteur pour réaliser une forme de sonde ;
formation sélective d'un domaine de contact à forte concentration (21) dans la surface de ladite sonde en semiconducteur ;
connexion sélective par jonction Schottky d'une première électrode (22) à la portion de pied (9) de ladite sonde en semiconducteur en un endroit espacé dudit domaine de contact à forte concentration ; et
connexion d'une deuxième électrode (32) audit domaine de contact à forte concentration.

10. Procédé de fabrication d'un capteur de déformation en semiconducteur selon la revendication 9, comprenant en outre l'étape de formation d'une couche mince (8) sur au moins une surface de ladite sonde pour solliciter par pression ladite jonction Schottky.

11. Microscope à sonde à balayage utilisant le capteur de déformation en semiconducteur selon l'une quelconque des revendications 1 à 8.
